# FASCICULE DE BREVET EUROPEEN

(11) **EP 0 559 505 B1**
(45) Date de publication et mention de la délivrance du brevet: **15.11.1995**
(21) Numéro de dépôt: 93400288.2
(22) Date de dépôt: 04.02.1993
(51) Int. Cl.: F16L 37/14, F16L 33/22

(54) **Dispositif de jonction entre un raccord tubulaire souple et un embout tubulaire rigide, notamment pour un circuit de refroidissement d'un véhicule automobile**
Vorrichtung zum Verbinden eines Schlauchendes mit dem Ende eines starren Rohres, insbesondere für ein Fahrzeugskühlsystem
Connection device between a hose coupling and a rigid pipe end, particularly for a vehicle cooling system

(30) Priorité: 04.03.1992 FR 9202593
(43) Date de publication de la demande: 08.09.1993
(73) Titulaire: AUTOMOBILES PEUGEOT, 75116 Paris (FR); AUTOMOBILES CITROEN, 92200 Neuilly-sur-Seine (FR)
(72) Inventeur: Huon, Daniel, F-78570 Andresy (FR)
(74) Mandataire: Habasque, Etienne Joel Jean-François

(56) Documents cités:
- EP-A- 0 264 010
- EP-A- 0 480 818
- FR-A- 2 628 819
- US-A- 2 487 470
- US-A- 3 534 988
- US-A- 4 063 760
- US-A- 4 133 564

## Description

La présente invention concerne un dispositif perfectionné de jonction entre un raccord tubulaire souple et un embout tubulaire rigide utilisable notamment dans l'industrie automobile.

Les véhicules automobiles modernes comportent un capot de plus en plus effilé en vue de l'amélioration du coefficient de pénétration du véhicule dans l'air.

La place disponible sous le capot, pour le radiateur, est donc réduite par rapport aux véhicules plus anciens.

L'eau du circuit de refroidissement est donc relativement moins refroidie sur les véhicules modernes et cette eau se trouve pendant la marche du véhicule, à une pression et à une température sensiblement supérieures à la pression et à la température de l'eau dans les circuits de refroidissement des véhicules plus anciens.

Cette augmentation de pression entraîne des risques de fuite, au niveau des jonctions entre les conduits de raccordement souples et les embouts de raccordement rigides, par exemple du radiateur au moteur.

Dans l'état de la technique, les conduits de raccordement ou raccords souples sont engagés sur l'embout rigide correspondant et fixés de manière étanche sur cet embout grâce à un collier de serrage disposé autour du raccord souple.

Les colliers de serrage utilisés peuvent être de différents types.

On utilise par exemple des colliers élastiques, mais ces colliers n'assurent pas une très bonne étanchéité lorsque la pression dans le circuit de refroidissement est sensiblement supérieure à la pression atmosphèrique.

De plus, ces colliers élastiques nécessitent l'utilisation d'outils spécifiques pour leur montage et leur démontage.

On peut également utiliser des colliers de serrage à crémaillère mais ces colliers requièrent également l'utilisation d'un outillage spécifique pour leur montage et leur démontage.

De plus, le démontage de tels colliers est une opération très difficile.

Il est également possible d'utiliser des colliers à vis à direction tangentielle, mais ces colliers sont très difficiles à placer correctement sur le raccord et l'embout. De plus, le bon serrage de ces colliers ne peut pas être contrôlé visuellement.

En conséquence, les dispositifs de jonction des circuits de refroidissement dans lesquels les raccords souples sont enfilés sur les embouts rigides du circuit et serrés par des colliers, ne donnent donc pas satisfaction dans les conditions actuelles et à fortiori dans le cas de circuits de refroidissement fonctionnant sous haute pression. De plus, ces dispositifs ne peuvent pas être montés de façon automatique.

On a également décrit dans la demande de brevet français n° 2 628 819 au nom des Demanderesses, un dispositif de jonction entre un raccord tubulaire souple et un embout tubulaire rigide, notamment pour un circuit de refroidissement d'un véhicule automobile, dans lequel le raccord souple est fixé de manière étanche à l'embout rigide par des organes de maintien et d'étanchéité, ce dispositif de jonction comportant deux éléments tubulaires rigides disposés de manière coaxiale par rapport à l'extrémité du raccord souple, à l'intérieur et à l'extérieur de ce raccord, respectivement, de manière que le raccord soit maintenu par serrage entre les deux éléments tubulaires, la fixation et l'étanchéité du raccord souple par rapport à l'embout rigide étant assurées par coopération de l'un au moins des éléments tubulaires avec les moyens de maintien et d'étanchéité.

Dans l'un des modes de réalisation décrits dans cette demande de brevet, les moyens de maintien sont constitués par un cavalier ou bague élastique comportant des branches pouvant s'écarter élastiquement, introduites dans des fentes traversant au moins partiellement la paroi de l'embout tubulaire et dans une gorge usinée dans l'un des éléments tubulaires rigides, mis en coincidence.

Les Demanderesses ont également décrit dans la demande de brevet européen 0 480 818, état de la technique selon Arc. 54(3) de la CBE, un autre dispositif de jonction entre un raccord tubulaire souple et un embout tubulaire rigide, notamment pour un circuit de refroidissement d'un véhicule automobile, le raccord souple étant fixé de manière étanche à l'embout rigide par des organes de maintien et d'étanchéité. Ce dispositif comporte deux éléments tubulaires rigides disposés de manière coaxiale par rapport à l'extrémité du raccord souple, à l'extérieur et l'intérieur de ce raccord, respectivement, de manière que le raccord soit maintenu par serrage entre les deux éléments tubulaires. La fixation et l'étanchéité du raccord souple par rapport à l'élément rigide sont assurées par coopération de l'un des éléments tubulaires avec les moyens de maintien et d'étanchéité et les moyens de maintien sont constitués par un cavalier ou bague élastique comportant des branches pouvant s'écarter élastiquement, introduites dans des fentes traversant au moins partiellement la paroi de l'embout tubulaire et adaptées pour coopérer avec des crans en saillie sur l'un des éléments tubulaires rigides.

Avantageusement, les crans comprennent une surface avant inclinée d'écartement des branches du cavalier lors de l'introduction de l'extrémité correspondante du raccord dans l'embout et une face arrière de blocage de ces branches en position pour empêcher tout retrait de cette extrémité du raccord de l'embout.

Le but de l'invention est de proposer une variante de réalisation de ces dispositifs de jonction.

A cet effet, l'invention a pour objet un dispositif de jonction entre un raccord tubulaire souple et un embout tubulaire rigide, notamment pour un circuit de refroidissement d'un véhicule automobile, le raccord souple étant fixé de manière étanche à l'embout rigide par des organes de maintien et d'étanchéité, et comportant deux éléments tubulaires rigides disposés de manière coaxiale par rapport à l'extrémité du raccord souple, à l'extérieur et à l'intérieur de ce raccord respectivement, de manière que le raccord soit maintenu par serrage entre les deux éléments tubulaires, l'élément tubulaire extérieur comportant à l'une de ses extrémités une partie en saillie vers l'extérieur adaptée pour coopérer avec une surface de butée de l'embout pour assurer le positionnement de ce raccord dans l'embout et à l'autre de ses extrémités une partie en saillie vers l'intérieur comportant dans le prolongement l'une de l'autre, une portion radiale délimitant une paroi d'une gorge de réception d'un joint d'étanchéité, et une portion axiale délimitant le fond de la gorge de réception du joint d'étanchéité et emmanchée de façon serrée sur une portion axiale correspondante de l'élément tubulaire intérieur, cet élément tubulaire intérieur comportant une portion radiale délimitant l'autre paroi de la gorge de réception du joint d'étanchéité.

L'invention sera mieux comprise à l'aide de la description qui va suivre, donnée uniquement à titre d'exemple et faite en se référant aux dessins annexés, sur lesquels :
- la Fig.1 représente une vue en perspective éclatée du dispositif de jonction décrit dans la demande de brevet européen n° 0 480 818.
- la Fig.2 représente une vue en coupe du dispositif de jonction représenté sur la Fig.1; et
- la Fig.3 représente une vue en coupe d'un dispositif de jonction selon l'invention.

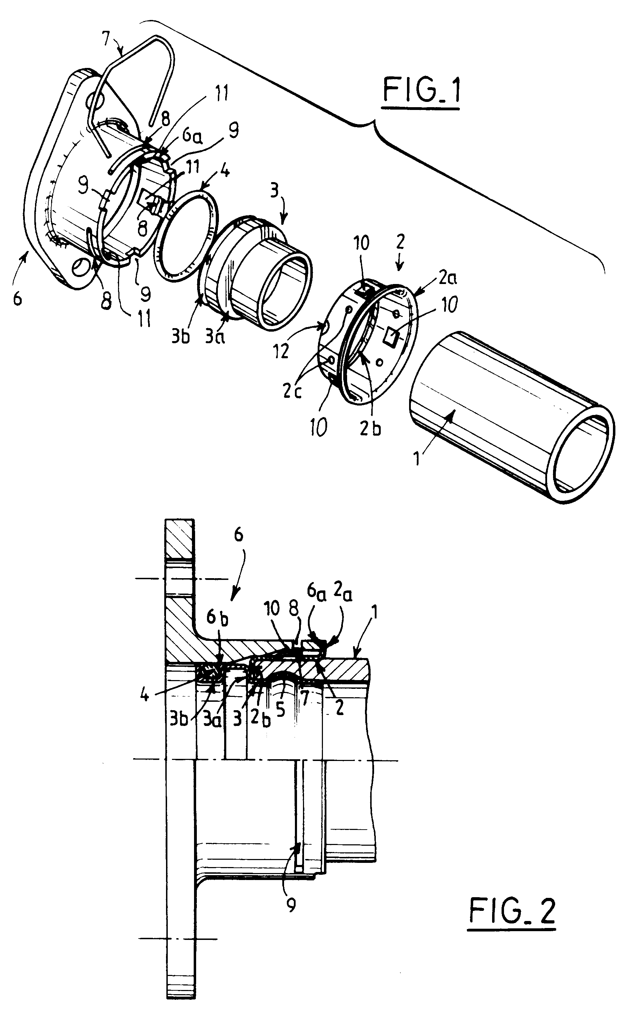

Sur les figures 1 et 2, on voit un raccord souple 1 constitué par l'extrémité de jonction d'une conduite en caoutchouc d'un circuit de refroidissement de véhicule automobile.

L'extrémité de ce raccord souple 1 est enfilée dans une première pièce ou élément de forme tubulaire rigide 2 présentant à chacune de ses extrémités, une portion repliée l'une, 2a, vers l'extérieur de cet élément tubulaire et l'autre, 2b, vers l'intérieur de celui-ci. Le raccord souple est enfilé dans cette pièce tubulaire jusqu'à ce que son extrémité vienne en appui contre la partie en saillie vers l'intérieur 2b de cette pièce.

Cet ensemble est ensuite introduit sur une extrémité cylindrique d'une seconde pièce ou élément tubulaire rigide 3, coaxial au premier, jusqu'à ce que la partie en saillie vers l'intérieur 2b de la pièce tubulaire extérieure 2 vienne en appui contre un épaulement 3a de cette seconde pièce tubulaire intérieure 3.

Cet épaulement 3a est ménagé dans la partie centrale de cet élément, tandis qu'à son autre extrémité cet élément tubulaire 3 comporte une gorge 3b de réception d'un joint d'étanchéité par exemple torique, 4, dont la fonction sera décrite plus en détail par la suite.

Une fois l'enfilement du raccord 1, et plus particulièrement de son extrémité entre ces deux éléments tubulaires 2 et 3, terminé, le serrage du raccord 1 entre les deux éléments tubulaires intérieur 3 et extérieur 2 est obtenu par déformation radiale d'une portion au moins de l'élément tubulaire intérieur 3 par exemple au niveau de la zone 5 de celui-ci.

Cette déformation peut être obtenue de toute manière connue en soi, par exemple par mandrinage.

On notera que l'élément tubulaire extérieur 2 comporte en regard de cette zone déformée, des trous 2c (Fig.1) permettant le fluage du matériau constituant ce raccord lors de cette opération de mandrinage.

Ceci permet d'assurer une bonne liaison entre les différents éléments.

Une fois cette opération terminée, le joint d'étanchéité 4 est placé dans la gorge 3b puis cet ensemble est introduit dans un embout tubulaire rigide 6 qui peut être constitué par exemple par un embout de raccordement d'un moteur de véhicule automobile. Cet embout est préalablement muni d'un cavalier 7. L'ensemble constitué du raccord 1 et des éléments tubulaires extérieur et intérieur 2 et 3, est enfilé dans cet embout jusqu'à ce que la partie en saillie vers l'extérieur 2a de l'élément tubulaire extérieur 2 vienne en appui contre une surface de butée 6a, prévue à l'extrémité correspondante de cet embout pour assurer un positionnement correct de l'ensemble décrit précédemment dans l'embout.

Dans cette position, le joint d'étanchéité 4 est en regard d'une surface d'étanchéité 6b de cet embout.

Des moyens de maintien de cet ensemble dans l'embout tubulaire 6 sont constitués par un cavalier ou bague élastique 7 comportant des branches pouvant s'écarter élastiquement, introduites dans des fentes 8, traversant la paroi de l'embout tubulaire 6 dans leur partie centrale mais constituant de simples saignées dans lesquelles se logent les branches du cavalier 7 dans leurs parties latérales. Ces branches sont adaptées pour coopérer, au niveau de la partie centrale des fentes 8 avec des crans par exemple 10, en saillie sur l'un des éléments tubulaires rigides.

Dans le mode de réalisation représenté, ces crans 10 sont ménagés sur l'élément tubulaire extérieur 2. Ces crans 10 comprennent avantageusement une face avant inclinée d'écartement des branches du cavalier 7 lors de l'introduction de l'ensemble raccord 1 - Eléments tubulaires 2 et 3 dans l'embout 6 et une face arrière de blocage de ces branches en position pour empêcher tout retrait dudit ensemble de l'embout.

Ainsi, lors de l'introduction de l'ensemble décrit précédemment dans l'embout 6, les faces avant des crans 10 écartent les branches déformables élastiquement du cavalier 7 qui, lorsque ces crans sont passés, reviennent dans leur position initiale en appui contre les faces arrière de ces crans pour empêcher tout retrait de cet ensemble.

On notera également que ces crans 10 peuvent être engagés dans des rainures 11 (Fig. 1) de l'embout tubulaire 6 pour assurer un positionnement correct de l'élément tubulaire extérieur 2 et donc du raccord 1 par rapport à l'embout 6. D'autres parties en saillie de cet élément tubulaire extérieur 2 ou de l'élément tubulaire intérieur 3, peuvent être utilisées pour remplir cette fonction.

Enfin, on notera que l'élément tubulaire extérieur 2 peut comporter également à son extrémité proche de la partie en saillie vers l'intérieur 2b, des lumières 12 permettant de contrôler visuellement la position du raccord 1 dans cet élément 2 et de s'assurer que ce raccord est correctement introduit dans cet élément 2.

Il va de soi bien entendu que des marques, par exemple de couleur, peuvent être réalisées sur les différents éléments mentionnés précédemment, pour permettre une indexation de position et un positionnement correct des différents éléments lors du montage.

Le montage de ce dispositif peut être automatisé. On pourra alors aménager la partie 2a, en y usinant des méplats, pour recevoir des moyens de préhension de robot. On pourra également prévoir une zone de contre-appui sur l'embout 6 et le démontage peut s'opérer très facilement en écartant les branches du cavalier élastique 7 par tout outil approprié.

Le démontage peut par exemple être nécessaire lorsque l'on désire intervenir sur le moteur ou sur le radiateur du véhicule et il suffit de retirer le cavalier 7 pour dégager l'ensemble raccord 1 - éléments tubulaires 2, 3 et joint torique 4 de l'embout 6.

Il est à noter que l'introduction d'un outil, tel qu'un tournevis, entre l'extrémité de l'embout 6, au niveau d'encoches 9 prévues à cet effet et la partie en saillie vers l'extérieur 2a de l'organe tubulaire extérieur 2 permet d'exercer une force de retrait importante lorsque l'on souhaite retirer le raccord. Ceci est nécessaire notamment en cas de collage anormal du joint d'étanchéité 4.

On constate donc que ce dispositif est très simple et très rapide à monter et que la bague élastique 7 montée préalablement sur l'embout 6 se met en place automatiquement lors du montage du raccord 1 dans cet embout 6.

Le raccord 1 est par ailleurs maintenu de façon très simple et très sûre entre les deux éléments tubulaires intérieur et extérieur 3 et 2, sans collage et sans emmanchement à force dans la mesure où le blocage en position est réalisé après introduction de ces éléments 2, 3 autour du raccord 1.

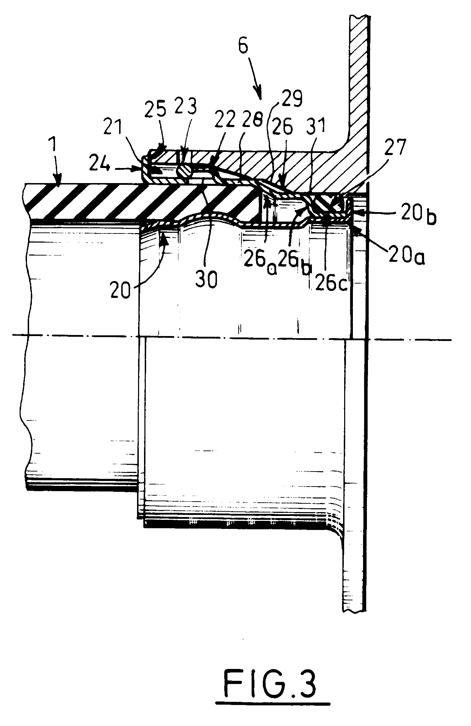

Sur la Fig.3, on a représenté une variante de réalisation de ce type de dispositifs, selon l'invention.

On reconnait en effet sur ces figures, le raccord souple 1 et l'embout tubulaire rigide 6.

L'extrémité du raccord souple 1 est maintenue par serrage entre deux éléments tubulaires 20 et 21 disposés de manière coaxiale par rapport à cette extrémité du raccord souple, à l'intérieur et à l'extérieur de celui-ci respectivement.

L'élément tubulaire extérieur 21 comporte des crans 22 en saillie sur celui-ci et adaptés pour coopérer avec un cavalier ou bague élastique 23 constituant des moyens de maintien en position de cette extrémité du raccord dans l'embout.

Ce cavalier présente effectivement des branches analogues à celles du cavalier 7 décrit en regard des figures 1 et 2, s'engageant dans des lumières de l'embout et coopérant avec les crans de l'élément tubulaire extérieur pour maintenir le raccord dans l'embout.

A l'une de ses extrémités, l'élément tubulaire extérieur 21 présente une portion repliée vers l'extérieur de cet élément, désignée par la référence 24 sur cette figure, et adaptée pour coopérer avec une surface de butée complémentaire 25 de l'embout 6 pour assurer un positionnement correct de cette extrémité du raccord dans l'embout.

A son autre extrémité, cet élément tubulaire extérieur 21 comporte une portion en saillie vers l'intérieur et désignée par la référence générale 26 sur cette figure.

Cette partie en saillie est reliée au reste de l'élément extérieur par une portion tronconique de butée 26a pour le positionnement de l'extrémité du raccord souple entre les deux éléments intérieur et extérieur.

Cette partie en saillie comporte également deux autres portions dans le prolongement l'une de l'autre, à savoir une portion radiale 26b formant une paroi d'une gorge de réception d'un joint d'étanchéité 27 et une portion axiale 26c, emmanchée de façon serrée sur une portion axiale correspondante 20a de l'élément tubulaire intérieur 20, et formant le fond de la gorge.

A cette extrémité, cet élément tubulaire intérieur 20 comporte également une portion radiale 20b, en saillie vers l'extérieur, constituant l'autre paroi de la gorge de réception du joint d'étanchéité et délimitant ainsi avec les portions 26b et 26c de l'élément tubulaire extérieur, la gorge de réception du joint d'étanchéité 27.

Les portions axiales complémentaires 26c, 20a des éléments tubulaires extérieur et intérieur, sont emman- chées l'une sur l'autre de façon étanche.

On conçoit donc que cette structure présente un certain nombre d'avantages par rapport à celles des dispositifs de l'état de la technique, dans la mesure où l'élément tubulaire extérieur est centré de manière extrêmement précise sur l'élément tubulaire intérieur.

Dans la mesure où la gorge de réception du joint d'étanchéité 27 est formée d'un côté par une portion radiale de l'élément tubulaire intérieur et d'un autre côté par une portion extrême de l'élément tubulaire extérieur, le positionnement axial relatif des deux éléments 20 et 21 est réalisé aisément et précisément par mise en butée de la portion radiale 20b contre l'extrémité de la portion axiale 26c.

Cet assemblage présente également une rigidité améliorée car les éléments tubulaires intérieur et extérieur sont reliés par cet emmanchement serré.

Par ailleurs, l'élément tubulaire extérieur comportant à la fois une portion 28 de centrage du raccord dans l'embout et une portion coaxiale 26c de réception du joint, respectivement engagées dans deux alésages coaxiaux 30,31 de l'embout reliés par une partie tronconique 29, une concentricité optimale et une introduction aisée du raccord dans l'embout sont réalisées, en assurant notamment une bonne fiabilité du joint d'étanchéité.

Les parties de ce dispositif non décrites en regard de cette figure 3 peuvent être analogues aux parties correspondantes du dispositif représenté sur les Fig.1 et 2.

Bien que l'on ait représenté un mode de réalisation dans lequel l'embout 6 constitue la sortie de l'eau d'un moteur, cet embout peut également être utilisé dans d'autres applications et présenter des formes différentes.

En effet, ce dispositif peut être utilisé dans n'importe quelle connexion du circuit de refroidissement d'un véhicule, ou pour tout raccordement d'une conduite à un élément du circuit de refroidissement.

Enfin, des applications dans des domaines autres que l'industrie automobile peuvent également être envisagées.

Ainsi qu'on l'a mentionné dans les demandes de brevet mentionnées précédemment, le dispositif selon l'invention permet également d'obtenir une simplification du montage en chaine et du démontage de ce type de dispositifs et un gain de temps notable.

L'invention peut s'appliquer à tout circuit de fluide sous pression, par exemple à un circuit d'air, notamment d'air de suralimentation, ou à un circuit de fluide utilisé dans un circuit de réfrigération.

## Revendications

1. Dispositif de jonction entre un raccord tubulaire souple et un embout tubulaire rigide, notamment pour un circuit de refroidissement d'un véhicule automobile, le raccord souple étant fixé de manière étanche à l'embout rigide par des organes de maintien et d'étanchéité, et comportant deux éléments tubulaires rigides (20,21) disposés de manière coaxiale par rapport à l'extrémité du raccord souple (1), à l'extérieur et à l'intérieur de ce raccord respectivement, de manière que le raccord (1) soit maintenu par serrage entre les deux éléments tubulaires (20,21), l'élément tubulaire extérieur comportant à l'une de ses extrémités une partie en saillie vers l'extérieur (24) adaptée pour coopérer avec une surface de butée (25) de l'embout pour assurer le positionnement de ce raccord dans l'embout de ce raccord et à l'autre de ses extrémités une partie en saillie vers l'intérieur comportant dans le prolongement l'une de l'autre, une portion radiale (26b) délimitant une paroi d'une gorge de réception d'un joint d'étanchéité (27) et une portion axiale (26c) délimitant le fond de la gorge de réception du joint d'étanchéité et emmanchée de façon serrée sur une portion axiale correspondante (20a) de l'élément tubulaire intérieur, cet élément tubulaire intérieur comportant une portion radiale (20b) délimitant l'autre paroi de la gorge de réception du joint d'étanchéité (27).

2. Dispositif selon la revendication 1, caractérisé en ce que les moyens de maintien sont constitués par un cavalier ou bague élastique (23) comprenant des branches pouvant s'écarter élastiquement, introduites dans des fentes traversant au moins partiellement la paroi de l'embout tubulaire (6) et adaptées pour coopérer avec des crans (22) en saillie sur l'élément tubulaire extérieur (21).

3. Dispositif selon les revendications 1 ou 2, caractérisé en ce que la partie (26) en saillie vers l'intérieur de l'élément tubulaire extérieur (21) est reliée au reste de celui-ci par une portion de butée (26a) de positionnement du raccord entre les deux éléments tubulaires extérieur et intérieur.

4. Dispositif selon la revendication 3, caractérisé en ce que la portion de butée (26a) est tronconique.

5. Dispositif selon l'une quelconque des revendications 1 à 4, caractérisé en ce que l'élément tubulaire extérieur (21) comporte une portion (28) de centrage du raccord, coaxiale à ladite portion axiale (26c) délimitant le fond de la gorge de réception du joint, ces deux portions étant respectivement engagées dans deux alésages coaxiaux (30,31) de l'embout (6) reliés par une partie tronconique (29).

## Claims

1. A connecting device between a flexible pipe coupling and a rigid pipe end, in particular for a cooling system of a motor vehicle, the flexible coupling being fixed in a sealed manner to the rigid pipe end by retaining and sealing members, the said connecting device comprising two rigid tubular members (20, 21) arranged co-axially relative to the end of the flexible coupling (1), on the outside and inside thereof respectively, in such a manner that the coupling (1) is clamped between the two tubular members (20, 21), one of the ends of the outer tubular member having a portion (24) projecting outwards and adapted to co operate with an abutment surface (25) of the pipe end to ensure the positioning of the said coupling in the pipe end, and the other end having a portion projecting inwards and comprising, along its extent, a radial portion (26b) delimiting a wall of a groove for receiving a seal (27) and an axial portion (26c) delimiting the bottom of the groove for receiving the seal and clamped to a corresponding axial portion (20a) of the inner tubular member, the said inner tubular member comprising a radial portion (20b) delimiting the other wall of the groove for receiving the seal (27).

2. A device according to claim 1, characterised in that the retaining means are formed by a resilient ring or staple (23) having arms which can be resiliently moved apart, are introduced into slots at least partially extending through the wall of the pipe end (6) and are adapted to co-operate with projecting steps (22) on the outer tubular member (21).

3. A device according to claim 1 or 2, charactetised in that the inwardly projecting portion (26) of the outer tubular member (21) is connected to the remainder thereof by an abutment portion (26a) for positioning the coupling between the two inner and outer tubular members.

4. A device according to claim 3, characterised in that the abutment portion (26a) is tapered.

5. A device according to any one of claims 1 to 4, characterised in that the outer tubular member (21) comprises a portion (28) for centering the coupling and co-axial with the said axial portion (26c) delimiting the bottom of the groove for receiving the seal, the two portions being engaged, respectively, in two co-axial bores (30, 31) provided in the pipe end (6) and connected by a tapered portion (29).

## Patentansprüche

1. Vorrichtung zum Verbinden eines Schlauchendes mit dem Ende eines starren Rohres, insbesondere für ein Fahrzeugkühlsystem, gemäß der das Schlauchende mit Hilfe von Halteelemerten und Dichtungselementen in abgedichteter Weise am starren Rohrende fixiert wird, mit zwei starren rohrförmigen Elementen (20, 21), die koaxial zum Schlauchende (1) an der Außenseite und an der Innenseite desselben so angeordnet sind, daß das Schlauchende (1) zwischen die beiden rohrförmigen Elemente (20, 21) festgeklemmt wird, wobei das äußere rohrförmige Element an einem seiner Enden einen nach außen vorstehenden Teil (24) aufweist, der mit einer Anschlagfläche (25) des Rohrendes zusammenwirken kann, um die Positionierung des Schlauchendes im Rohrende sicherzustellen, und am anderen Ende einen nach innen vorstehenden Teil aufweist, in dessen Verlängerung ein radialer Abschnitt (26 b), der eine Wand einer Vertiefung zur Aufnahme einer Dichtung (27) bildet, und ein axialer Abschnitt (26 c), der den Boden der Vertiefung zur Aufnahme der Dichtung bildet und durch Pressung auf einen entsprechenden axialen Abschnitt (20 a) des inneren rohrförmigen Elementes aufgeklemmt ist, vorgesehen sind, und wobei das innere rohrförmige Element einen radialen Abschnitt (20 b) aufweist, der die andere Wand der Vertiefung zur Aufnahme der Dichtung (27) bildet.

2. Vorrichtung nach Anspruch 1, dadurch gekennzeichnet, daß die Halteeinrichtungen durch eine Klammer oder einen elastischen Ring (23) gebildet sind, die bzw. der Schenkel besitzt, die sich elastisch ausbreiten können und in Schlitze eingeführt sind, die die Wand des Rohrendes (6) zumindest teilweise durchdringen, und die mit Rasten (22) zusammenwirken können, welche am äußeren rohrförmigen Element (21) vorstehen.

3. Vorrichtung nach Anspruch 1 oder 2, dadurch gekennzeichnet, daß der in das Innere des äußeren rohrförmigen Elementes (21) vorstehende Teil (26) mit dem restlichen Teil dieses Elementes über einen Anschlagabschnitt (26 a) zur Positionierung des Schlauchendes zwischen dem inneren und äußeren rohrförmigen Element verbunden ist.

4. Vorrichtung nach Anspruch 3, dadurch gekennzeichnet, daß der Anschlagabschnitt (26 a) kegelstumpfförmig ausgebildet ist.

5. Vorrichtung nach einem der Ansprüche 1-4, dadurch gekennzeichnet, daß das äußere rohrförmige Element (21) einen Zentrierabschnitt (28) für das Schlauchende aufweist, der koaxial zu dem axialen Abschnitt (26 c) angeordnet ist, der den Boden der Vertiefung zur Aufnahme der Dichtung bildet, wobei diese beiden Abschnitte in zwei koaxialen Bohrungen (30, 31) des Rohrendes (6) in Eingriff stehen, welche über einen kegelstumpfförmigen Teil (29) miteinander verbunden sind.
